# EUROPEAN PATENT SPECIFICATION

(11) **EP 2 227 425 B1**
(45) Date of publication and mention of the grant of the patent: **26.04.2017**
(21) Application number: 08863555.2
(22) Date of filing: 18.12.2008
(51) Int. Cl.: B65G 53/52, B65G 53/34, B08B 9/032, B65F 5/00, B65G 53/24, B65G 53/66

(54) **METHOD AND APPARATUS IN PNEUMATIC MATERIAL CONVEYING SYSTEM**
VERFAHREN UND VORRICHTUNG IN EINEM PNEUMATISCHEN MATERIALFÖRDERSYSTEM
PROCÉDÉ ET APPAREIL MIS EN OEUVRE DANS UN SYSTÈME PNEUMATIQUE DE TRANSPORT DE MATIÈRES

(30) Priority: 21.12.2007 FI 20075950; 21.12.2007 FI 20075951; 18.02.2008 FI 20085144
(43) Date of publication of application: 15.09.2010
(73) Proprietor: Maricap OY, 01450 Vantaa (FI)
(72) Inventor: SUNDHOLM, Göran, FI-04310 Tuusula (FI)
(74) Representative: Heinänen Oy Patent Agency
(86) International application number: PCT/FI2008/050760
(87) International publication number: WO 2009/080884

(56) References cited:
- DD-A1- 226 349
- FR-A1- 2 271 140
- JP-A- 4 251 003
- JP-A- H0 826 410
- JP-A- H07 309 437
- JP-A- 2003 012 152
- JP-A- 2003 012 152
- JP-A- 2007 225 195
- US-A- 4 995 765

## Description

### Background of invention

The invention relates to a method according to the preamble of claim 1.

The invention also relates to an apparatus according to the preamble of claim 17.

A method and an apparatus according to the preambles of claims 1 and 17 are known from US 4,995,765. The invention relates generally to pneumatic conveying systems, such as vacuum conveying systems, particularly to collecting and conveying waste, such as conveying household waste.

Systems are known in which waste is conveyed in a piping by means of suction. In these, waste is conveyed for long distances in the piping by suction. Apparatuses are utilised, inter alia, for conveying waste in different institutions. Typical for them is that a vacuum apparatus is used for achieving a pressure difference, in which apparatus underpressure in the conveying pipe is provided with vacuum generators, such as vacuum pumps or an ejector apparatus. In the conveying pipe, there is typically at least one valve element by opening and closing of which make-up air coming in the conveying pipe is regulated. The vacuum conveying systems typically contain, inter alia, the following problems: high energy consumption, high air flow in the piping, problems with noise, dust and fine particles in the outlet pipe. Furthermore, prior-art apparatuses can have moisture problems. Moisture often accesses the piping which possibly hinders the conveying process or harms the material intended to be conveyed. In rainy weather, the prior-art apparatuses can suck even e.g. 1,000 litres of water per suction from outdoor air. This causes problems with corrosion and blockages. Furthermore, large systems have required arranging several separate make-up air valves, which increases the complexity and costs of the systems. In waste conveying systems, it is possible to convey very different types of materials. They can have very different properties. With some materials, the susceptibility to forming blockages can be quite high. For example, waste paper etc. sticks to the piping when moist. Documents JP 2003012152A, JP H0826410A, US 4995765A and FR 2271140A1 show pneumatic material conveying systems.

An object of this invention is to achieve a totally novel arrangement into connection with material conveying systems by means of which the disadvantages of known arrangements are avoided. Another object of the invention is to provide an arrangement applicable for vacuum conveying systems by means of which the noise problems of material feed can be decreased. An additional object of the invention is to provide an arrangement by means of which it possible to clear and remove blockages formed in the conveying piping easier than before. A yet further object is to provide an arrangement by means of which the volume of outlet air of the system and, at the same time, emissions of dust and fine particles and possible odour nuisances can be decreased.

### Brief description of invention

The invention is based on an idea in which at least a part of the material conveying pipe belongs to a circuit in which conveying air can be circulated and in which the circulation direction of conveying air can be reversed.

The method according to the invention is characterised by the features of claim 1.

In addition, particular embodiments of the method according to the invention are stated in claims 2-16.

The apparatus according to the invention is characterised by the features of claim 17. Particular embodiments of the apparatus according to the invention are stated in claims 18-28.

The arrangement according to the invention has numerous significant advantages. By arranging the piping of the system to comprise a circuit where at least part of conveying air circulates, the volume of outlet air can be decreased. At the same time, the energy consumption of the system is minimised. By maintaining underpressure and simultaneously blowing, it is possible to provide an effective circulation of conveying air in the circuit and conveyance of material in the conveying pipe. With the arrangement according to the invention, it is possible to decrease the volume of outlet air substantially and simultaneously to decrease possible problems with dust and fine particles in the outlet pipe. The arrangement according to the invention also substantially decreases the noise problem caused by prior art. Moisture accumulated in the piping is minimised and the piping can be dried by circulating air in the piping. As the volume of air being sucked inside decreases, also energy consumption decreases. By opening and closing the feed points of the system according to the invention, the material is provided with an effective transfer into and conveyance in the conveying pipe when, at the same time, the noise effect caused by the operation of the system can be minimised. By arranging the conveying pipe of the material conveying system to consist of operating areas i.e. partial circuits, it is possible to effectively arrange the conveyance of the material in the conveying piping and emptying the feed points into the conveying pipe. By arranging the conveying air circulation in the reverse direction, an effective removal of blockings is provided. In a circular piping, it is easily possible to arrange the change of the conveying air circulation in the reverse direction. By changing the air circulation direction and/or pressure and/or air flow rate, it is possible to provide a more effective removal of a blockage.

### Brief description of figures

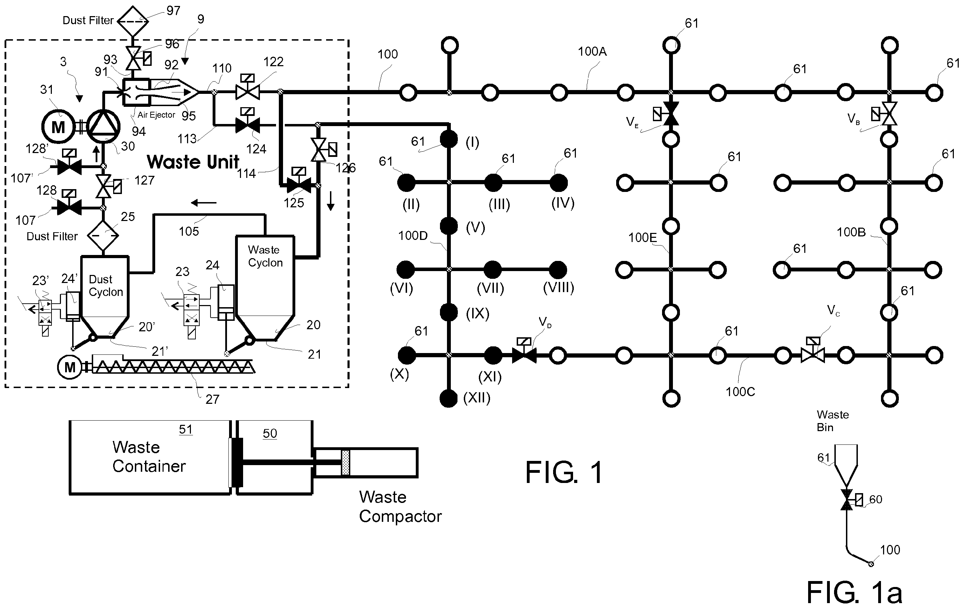

In the following, the invention will be described in detail by means of an example with reference to the accompanying drawings in which
Fig. 1 schematically shows a system according to an embodiment of the invention,
Fig. 1 a shows a part of a system according to the invention as simplified,
Fig. 2 schematically shows a system according to an embodiment of the invention in a second operating mode,
Fig. 3 schematically shows a system according to an embodiment of the invention in a third operating mode, and
Fig. 4 schematically shows a system according to an embodiment of the invention in a fourth operating mode.

### Detailed description of invention

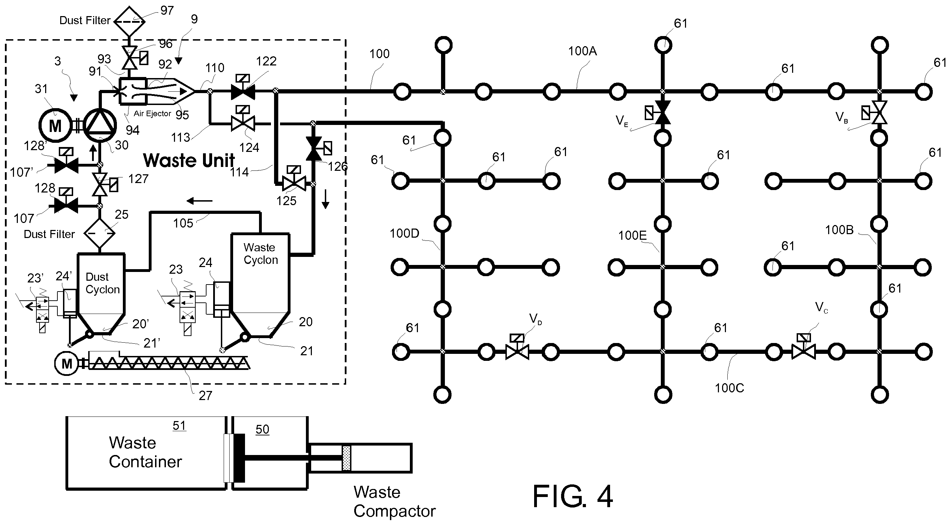

Figs. 1-3 show operating modes of a system according to the invention which can also be used in an arrangement according to the invention shown in Fig. 4.

Fig. 1 shows a pneumatic material conveying system according to an embodiment of the invention, particularly a waste conveying system, as a simplified schematic diagram. The figure shows a material conveying pipe 100 along which is arranged at least one, typically several feed points 61. The feed point 61 is a feed station of material, particularly of waste material, intended to be conveyed, from which point the material, particularly waste material, such as household waste, intended to be conveyed is fed to the conveying system. The system can comprise several feed stations 61 from which the material intended to be conveyed is fed to a conveying piping 100, 100A, 100B, 100C, 100D, 100E. The feed station 61 is designated in the figure with a point, whereby by opening and closing a gate element in connection with the feed station, such as a valve element 60, material can be conveyed from the feed point 61 to the conveying pipe 100. Fig. 1 a shows a feed point 61 used in the system according to the invention and its outlet valve 60 in more detail. The feed point is connected on the side of the valve to the conveying pipe 100 or a pipe being in connection with it. Typically, the conveying piping comprises a main conveying pipe 100 into which several branch conveying pipes can have been connected and into which again several feed stations 61 can have been connected. The fed material is conveyed along the conveying piping 100, 100A, 100B, 100C, 100D to a separator device 20 in which the material being conveyed is separated, e.g. due to dropping rate and centrifugal force, from conveying air. The separated material is removed, e.g. when required, from the separator device 20 to a material container, such as a waste container 51, or to further treatment. The material container can comprise, as in the embodiment of the figures, a waste compactor 50, with which the material is compacted by compressing into smaller size, and from which the material is further conveyed to the waste container 51. In the embodiment of Fig. 1, the separator device 20 is provided with material outlet elements 21, 24. From the separating device 20, a conveying air channel 105 leads to means 3 for generating underpressure in the conveying pipe. In the embodiment of Fig. 1, the means for generating underpressure comprise a pump device 3, such as a vacuum pump unit. With the means for generating underpressure, underpressure required for conveying the material is provided in the conveying piping 100 and/or its section. The vacuum pump unit 3 comprises a vacuum pump 30 which is operated by an actuator 31. The system comprises means for circulating conveying air in the circuit, a section of which is formed by at least a part of the conveying piping 100, 100A, 100B, 100C, 100D, 100D, 100E. In the embodiment of Fig. 1, the conveying piping 100 is dividable into operating areas or partial circuits 100A, 100B, 100C, 100D, 100E by valve elements V_{B}, V_{C}, V_{D} i.e. area valves.

Fig. 1 shows a situation in which the valve element V_{D} is closed, whereby conveying air is not able to circulate in the circuit. The suction side of the vacuum generator 3 being connected directly or by means of the conveying air channel 105 to at least one separator device 20, 20' in which again the delivery end of the conveying pipe 100 is connected, underpressure is provided in the conveying pipe to at least the section of the circuit which is in the material conveying direction between at least one valve, in Fig. 1 the valve V_{D}, and the separator device 20. The conveying direction of material and the travel direction of air are designated with arrows in Fig. 1. Underpressure prevails also in the section of the circuit between the separator device 20 and the vacuum generator 3, i.e. in the conveying air channel 105, in the embodiment of the figure also in the second separator device 20' i.e. a dust separator and the section of the conveying air channel 105 extending from it to the vacuum generator 3. In a case according to the figure, when opening in the feed point 61 its valve element 60, a material portion intended to be conveyed is conveyed to the conveying pipe 100, in the figure to the section 100D of the conveying pipe, to be conveyed further to the separator device 20. Possible make-up air in the conveying pipe comes e.g. via the feed point 61 when opening the valve 60 in the conveying pipe.

The blowing side of the vacuum pump 30 of the pump device 3 in the embodiment of Fig. 1 is arranged to blow in an ejector device 9 in the operating mode in question. The ejector device 9 is arranged between the pump device 3 and the conveying piping 100 so that an ejector nozzle 91 of the ejector device 9 is connected to a channel 110 coming from the blowing side of the pump device. Then, as the actuating medium of the ejector 9 operates conveying medium, typically air, of the blowing side of the pump device 3, such as a vacuum generator. The ejector device 9 comprises an ejector pipe 92 in which the ejector nozzle 91 is arranged to direct a medium spray. The ejector device comprises a chamber space 94 in which the ejector nozzle 91 and the first end of the ejector pipe 92 and a fitting 93, via which is openable and closable a connection outside the chamber space 94, are arranged. When the ejector nozzle 91 sprays the medium in the ejector pipe 92, suction is provided which draws extra air along with it via the fitting 93. A blowing side 95 of the ejector device 9 is connected to the conveying pipe 100 or the channel 110 leading to the conveying pipe. The operating principles of the ejector device are considered known as such to those skilled in the art and they will not be examined in more detail. From the influence of the ejector 9, a considerable increase is provided in the main flow blown by the pump device 3 due to an extra air flow via the fitting 93, typically in the range of 20-60%. With the combination of the pump device 3 and the ejector 9, an increase is thus provided in the conveying air flow by means of which it is possible to effectively provide overpressure on the blowing side of the pump and/or underpressure and/or a suction effect on the suction side of the pump device. In the fitting 93 is arranged a valve element 96 and a filter element 97, such as a dust filter. In certain cases, the fitting 93 can also operate as an outlet channel.

From the blowing side of the ejector 9 is arranged a connection, e.g. via the air channel 110, to the conveying pipe 100 on its supply side. In the air channel 110 of the blowing side is arranged a valve element 122 which, when closed, prevents a connection of the blowing side to the usual supply side of the conveying pipe 100.

The operation of the system is controlled so that, for emptying the feed points of a desired operating area, at least one valve is open in the material conveying direction in relation to the operating area of the conveying pipe 100 and on the supply side of the conveying air i.e. on the side of suction, whereby the suction is able to affect the conveying pipe of the operating area. Let us assume that, in the arrangement according to the figure, the feed points 61 of the conveying pipe area 100D are to be emptied. Then, all area valves between the separator element 20 and the operating area in the conveying pipe 100 (the section 100D of the conveying pipe in the figure) in the conveying direction are open (a valve 126 in the figure). Then, suction provided by at least one vacuum generator 3 prevails in the conveying piping 100D in the operating area. At least one valve V_{D} on the blowing side of the conveying pipe 100 is closed, whereby only suction prevails in the operating area. The feed points 61 of the operating area or at least part of them are emptied so that the connection of the feed point 61 (I) closest to the delivery end in the conveying direction of the conveying pipe, i.e. in the embodiment according to the figure closest to the separator device 20, to the conveying pipe 100D is opened first, whereby the material is able to convey from the first feed point to the conveying pipe, and before the connection of the first feed point (I) to the conveying pipe closes, the connection of the next feed point 61 (II) to the conveying pipe is opened. In the embodiment of the figure, this is, when travelling against the material conveying direction, the next feed point 61 (II) intended to be emptied. After this, the connection of the first feed point 61 (I) is closed to the conveying pipe. Equivalently, the connection of the third feed point 61 (III) intended to be emptied to the conveying pipe is opened before the connection of the second feed point 61 (II) to the conveying pipe is closed. This operation is repeated until all desired feed points have been emptied. In the figure, it has been considered emptying all the feed points 61 of the conveying pipe area 100D, whereby their emptying sequence to the conveying pipe 100, 100D is designated in the figure by numerals within parentheses: (I), (II), (III), (IV), (V), (VI), (VII), (VIII), (IX), (X), (XI), and (XII). When the passage of the last feed point 61 (XII) intended to be emptied in the operating area to the conveying pipe 100 has been opened, the material has conveyed to the conveying pipe 100, 100D, and the passage of the feed point to the conveying pipe is closed, a connection is opened in the conveying pipe 100D of the operating area from the blowing side by opening at least one valve element VD which is between the operating area and the pump device 3 blowing to the conveying pipe 100. Then, an intensified conveying effect (suction and blowing together) is provided for the material being conveyed transferred in the conveying pipe 100, 100A, 100B, 100C, 100D. The conveying air circulates on a route designated with arrows in the figure, whereby material portions conveyed from the feed points to the conveying pipe convey in the conveying piping further to the separator device 20 in which the material being conveyed is separated from conveying air. In the figure, the area valve V_{E} of the conveying pipe 100E of the operating area is closed, whereby conveying air is not able to access the conveying pipe 100E of the operating area but circulates on the route of the conveying pipe of the area via 100A, 100B, 100C, 100D. In connection with the emptying of different operating areas, the material conveying route from the operating area to a delivery station, such as to the separator element 20, can be optimised by keeping the area valves open along the desired conveying route.

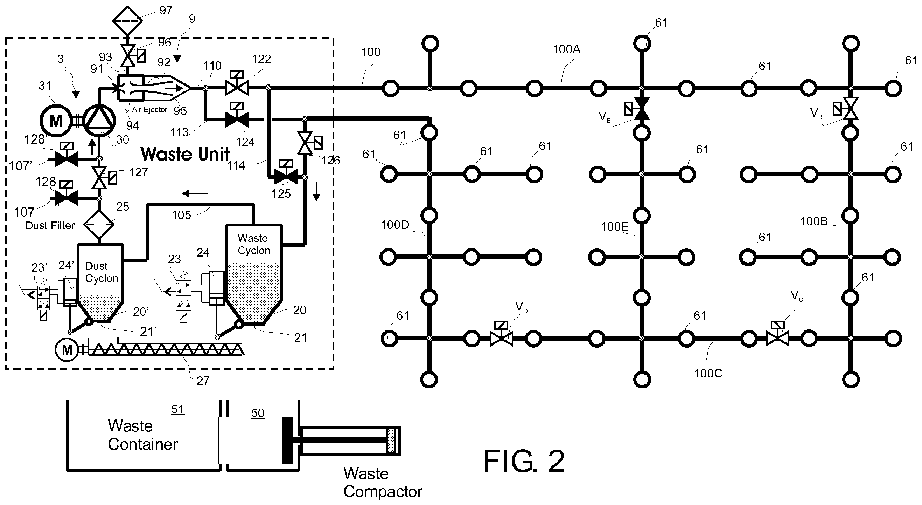

Fig. 2 shows an operating mode of a system according to the invention in which conveying air is able to circulate in the circuit, a section of which is formed by at least a part of the conveying pipe 100 and in which in the embodiment of the figure belong the separator device 20, the conveying air channel 105, the possible second separator device 20' and from the blowing side of the vacuum generator the air channel 110 on the supply side of the conveying pipe 100. The vacuum generator 3 is arranged to circulate air in the circuit and to provide a suction effect in the conveying pipe 100, at least its delivery end, i.e. in the conveying direction at the end on the side of the separator element 20. According to the embodiment of the figure, the vacuum generator 3 is also arranged to provide a blowing effect in the conveying pipe, in the figure via the air channel 110 and the ejector device 9. One or more area valves of the conveying pipe 100, in the figure area valves V_{B}, V_{C}, V_{D} and the valve 122 and 126, are in the open position, whereby conveying air is able to circulate in the circuit, a section of which is formed by at least a part of the feed pipe 100, whereby material portions fed in the conveying pipe from one or more feed stations 61 move towards the separator device 20. In the ejector device, to a main flow produced by the pump device is combined an additional flow coming from the fitting 93 which is led, due to the suction provided by the ejector device, from the fitting 93 to the ejector in which it is mixed with the main flow. Then, with the pump device together with the ejector, an extremely effective blowing effect is provided in the circuit on its supply side and a suction effect on the side of the separator element i.e. on the return side.

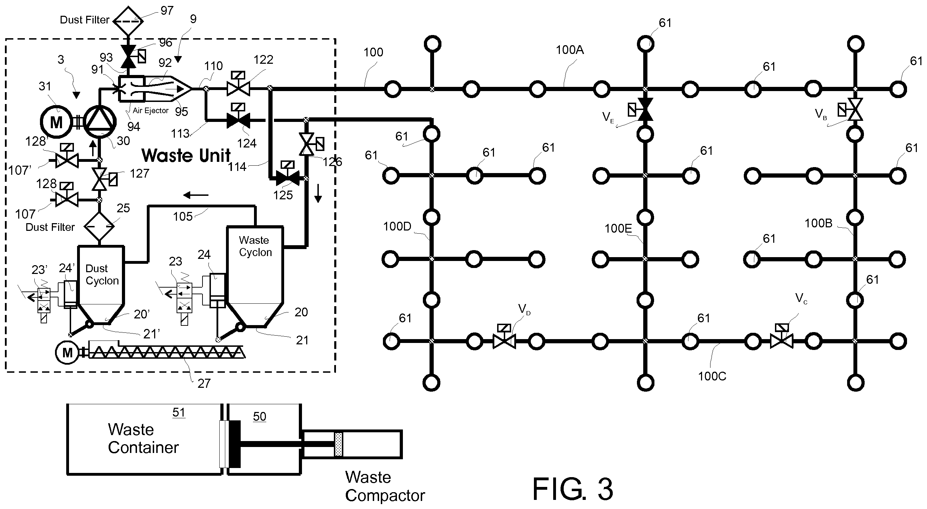

Fig. 3 shows an operating mode of a system in which a connection to the outlet channel, which is in the embodiment of the figure the fitting 93 of the ejector 9, is closed by means of the valve 96. Then, there is a connection from the blowing side of the pump device 3 via the air channel 110 on the supply side of the conveying pipe 100. The pump device circulates air in the circuit a section of which is formed by the conveying piping. In the embodiment of the figure, there has also been arranged at least one fitting 107, 107' in which there is a valve 128, 128' by opening of which extra air can be brought on the suction side of the pump device 3 from outside the circuit. By opening the valve 128, 128', it is possible to raise the pressure of air in the conveying pipe if required and to provide an increased blowing effect in the circuit. In the embodiment of the figure, the valve 128, 128' of at least one fitting 107, 107' is open, whereby it is possible to bring extra air on the suction side of the pump device 3 from outside the circuit. By opening the valve 128, 128', it is then possible to raise the pressure of air in the conveying pipe if required and to provide an increased conveying rate of conveying air. The embodiment of Fig. 3 is particularly well applicable in the air flushing of the piping. With the embodiment of the figure, it is also possible to dry the piping. With the vacuum generator is then advantageously provided a greater flow rate to the pressure side than the suction side. Air heats up when compressing, whereby the drying process is also intensified.

In the embodiment of the figure, the inlet air fitting 107 is between at least one separator device 20 and the pump device, such as the vacuum generator 3, in the circulation direction of air. By opening the valve 128, it is then possible to raise the pressure of air in the conveying pipe if required and to provide an increased flow rate.
Air heats up when compressing, such as in a vacuum pump of a vacuum unit, whereby the drying process is simultaneously intensified when heated air is circulated in the piping. By air flushing and drying, the conveyance of material particles in the conveying piping can be improved. On the other hand, it is also possible to prevent the formation of moisture in the conveying piping hindering the conveyance of material. Furthermore, possible odour nuisances possibly caused by material particles remaining in the piping can be minimised, because it is now possible to convey them more effectively to the separator device 20, 20' and further to the material container 51. It is easier to keep the piping clean by using the intensified air flushing. The air flushing also quickens the re-commissioning of the apparatus after a possible wash of the piping. Depending on the target of application, several pump devices can be connected to blow and/or suck in the piping, whereby it is possible to further intensify air circulation in the piping.

Fig. 4 shows the system according to the invention in which there is an operating mode by which the circulation direction of conveying air can be reversed at least in a section of the circuit. This can be utilised e.g. in a possible malfunction situation in which a blockage has been formed in the conveying piping 100, 100A, 100B, 100C, 100D, 100E. In the conveying pipe is arranged on the supply side at a distance from the separator device 20 a valve element 126, at the reverse side of which in relation to the separator element is arranged an air channel 113 in which the blowing side of the pump device 3 is connectable. Equivalently, in the air channel 110 of the blowing side is arranged the valve element 122 which, when closed, prevents a connection of at least the blowing side of the pump device 3 to the usual supply side of the conveying pipe 100. From the blowing side of the pump device 3, such as a vacuum unit, is thus arranged a medium passage, such as the air channel 113, to the conveying piping 100 on its reversed supply side. In the conveying pipe is formed a channel section 114 which is connected to the conveying pipe in a section between the valve element 126 and the separator device 20 or directly to the separator device, whereby the circulation direction of conveying air is reversed only in a section of the circuit, mainly in the section of the conveying pipe 100. Then, possible blockages in relation to the normal circulation direction are sucked "backwards" in relation to their feed point and in relation to the normal conveying direction. By changing the conveying direction back and forth, it is possible to provide pulses in a possible blockage point from reverse directions, which assists removing blockages and returning the system back to the normal mode.

The invention thus relates to a method according to claim 1. Advantageous embodiments of the method are according to dependent claims 2-16.

The invention also relates to an apparatus according to claim 17. Advantageous embodiments of the apparatus are according to claims 18-28.

According to a yet further advantageous embodiment, in the method, the direction of conveying air circulation is reversed alternately at least in a section of the circuit, which section is formed by at least a part of the conveying pipe 100. Then, pulses are provided in a possible blockage which facilitate clearing the blockage. It is also possible to affect the pressure and flow rate which can be varied together with the direction reversals of the air circulation for intensifying the removal of a blockage.

The suction provided by the pump device 3 to the conveying pipe 100, in the figures from the side of the separator device 20, is advantageously greater than the blowing, whereby conveyance takes place in underpressure. The suction being greater than blowing, underpressure is provided in the piping, whereby waste can be sucked inside the piping from a funnel of the feed station 61.
The suction being greater than the blowing, which is the target in the system according to the invention, material fed to the conveying pipe, particularly waste material, will not be compressed and compacted, but will be able to travel "freely" in the pipe conveyed by conveying air. Then, the potential of the material being conveyed to form blockages is considerably lower than in a situation in which the blowing is greater than the suction, whereby there is a risk that the material being conveyed will accumulate and block the conveying pipe. Furthermore, underpressure decreases the power required to convey the material, because even partial underpressure in relation to the material portion being conveyed on the side of the conveying direction considerably decreases air drag, among others.

In the figure, arrows designate the direction of motion of air in the piping in the operating mode.

The outlet valve 60 of the feed point 61 is opened and closed so that material portions of suitable size are conveyed from the feed point 61 to the conveying pipe 100. Material is fed from the feed point 61, such as a waste container, when after the container is full, the outlet valve 60 is opened either automatically or manually.

The suction being greater than the blowing, which is the target in the system according to the invention, material fed to the conveying pipe, particularly waste material, will not be compressed and compacted, but will be able to travel "freely" in the pipe conveyed by conveying air. Then, the potential of the material being conveyed to form blockages is considerably lower than in a situation in which the blowing is greater than the suction, whereby there is a risk that the material being conveyed will accumulate and block the conveying pipe. Furthermore, underpressure decreases the power required to convey the material, because even partial underpressure in relation to the material portion being conveyed on the side of the conveying direction considerably decreases air drag, among others. In the figure, arrows designate the direction of motion of air in the piping in the operating mode.

The outlet valve 60 of the feed point 61 is opened and closed so that material portions of suitable size are conveyed from the feed point 61 to the conveying pipe 100. Material is fed from the feed point 61, such as a waste container, when after the container is full, the outlet valve 60 is opened either automatically or manually.

The system typically operates as follows: An outlet hatch 21, 21' of at least one separator device 20, 20' is closed and a valve 126 between the main conveying pipe 100 and the separator device 20 is open. The pump unit 3 maintains underpressure in the main conveying pipe 100.

All outlet valves 60 in the vicinity of the feed points 61 i.e. waste containers are closed. In the start situation 100, the valve V_{D} is closed.

Let us assume that a waste container of the feed point 61 belonging to the circuit of the operating area 100D of the conveying pipe 100 is to be emptied. Based on an emptying signal, the outlet valve 60 is momentarily opened, e.g. for 2-10 seconds, whereby the material being conveyed, such as waste material, conveys from the effect of underpressure to the conveying pipe 100D. The outlet valve 60 is typically closed after a few seconds after the start situation. The vacuum pump unit 3 maintains desired underpressure. The valve V_{D} is opened, whereby in the circuit of the piping is provided air circulation and possibly also a blowing effect i.e. pressure effect and suction effect which conveys the material portion being conveyed along the piping to the separator device 20. One or more feed points 61 are emptied. According to an advantageous embodiment, the one of the feed points of the desired operating area which is in the conveying direction closest to the separator device 20 is emptied first, and then the next closest feed point and so on until the desired feed points have been emptied.
When the separator device 20 is full, the valve 126 of the conveying pipe 100 closes and a control valve 23 opens, whereby the actuator 24 of the outlet hatch 21 of the separator device opens the outlet hatch 21 and the material accumulated in the separator device is emptied in the compactor device 50 and further in the waste container 51. The outlet hatch 21 of the separator device 20 is closed and the valve 126 opened.
After this, the start situation is reverted and the emptying process can be repeated or the emptying of some other feed point/feed points can be implemented.
The waste container 51, such as a waste freight container, is replaced or emptied when it is full.

The system can also comprise several separator devices 20, 20' in which material conveyance is controlled, e.g. based on the sort of the material or the capacity of the system.
It is obvious to those skilled in the art that the invention is not limited to the embodiments described above, but it may be varied within the scope of the enclosed claims.

## Claims

1. A method for pneumatically conveying waste material with a pneumatic waste conveying system, which conveying system comprises at least one feed point (61) of waste material, a material conveying pipe (100) which is connectable to the feed point (61), a separator device (20) in which the material being conveyed is separated from conveying air, and a pump device (3) for providing a pressure difference in the conveying pipe (100) at least during the conveyance of the material, wherein at least a part of the conveying piping (100) is connectable as a section of a circuit in which conveying air is circulated at least during the conveyance of the waste material and that, in the method, the conveying air circulation is connected, at least momentarily, to a reverse direction in relation to the normal conveying direction at least in a section of the circuit by means (113, 114, 122, 124, 125, 126) for connecting the conveying air circulation to a reverse direction in relation to the normal conveying direction at least in that section of the circuit, which section of the circuit is formed by at least a part of the conveying pipe (100), for removing a possible blockage,
**characterized in that** the circulation direction of the conveying air is connected in reverse direction only in said section of the circuit, mainly in section of the conveying pipe (100), and before the separator device (20) in a material conveying direction,
wherein the means for connecting the conveying air in the reverse direction comprise
a first air channel (110) on the blowing side of the pump device (3) to the usual supply side of the conveying pipe, said first air channel (110) comprising a first valve element (122) which, when closed, prevents a connection of at least the blowing side of the pump device (3) to the usual supply side of the conveying pipe (100),
a second air channel (113) from the blowing side of the pump device (3) to the reversed supply side of the conveying pipe (100) in which the blowing side of the pump device (3) is connectable,
and a second valve element (126) in the conveying pipe between the separator device (20) and the second air channel (113),
wherein a channel section (114) formed in the conveying pipe is connected to the conveying pipe (100) in a section between the second valve element (126) and the separator device (20) or directly to the separator device (20).

2. A method according to claim 1, **characterised in that** at least part of conveying air is circulated via an ejector device (9) in which extra air is brought to the circuit.

3. A method according to claim 2, **characterised in that** at least part of blowing air of the pump device (3) is used as the actuating medium of the ejector device (9).

4. A method according to any one of claims 1-3, **characterised in that**, in the material feed stage, underpressure is provided from the feed point (61) to the conveying pipe (100) to at least a part of the conveying piping (100) with the pump device, whereby an outlet air channel, such as a fitting (93), of the blowing side of the pump device (3) is open.

5. A method according to any one of claims 1-4, **characterised in that**, in the conveying stage, at least the main part of the air on the blowing side of the pump (3) is circulated in the circuit on the supply side of the conveying pipe (100).

6. A method according to any one of claims 1-5, **characterised in that**, in the method, in the circuit is brought make-up air via at least one air inlet (107, 107', 93) which advantageously comprises a third valve element (128, 128', 96).

7. A method according to any one of claims 1-6, **characterised in that** the method comprises an operating mode in which air is removed from the circuit via at least one air outlet, such as said fitting (93), which advantageously comprises a gate/regulating element, such as said third valve element (96).

8. A method according to any one of claims 1-7, **characterised in that** the circulation of air in the circuit, which comprises at least a part of the conveying piping (100), is regulated and/or controlled and/or opened or closed by the gate/regulating elements, such as valve elements (122, 124, 125, 126, 127, V_{A}, V_{B}, V_{C}, V_{D}), which are arranged in the circuit.

9. A method according to any one of claims 1-8, **characterised in that**, in the method, underpressure is provided in the circuit with at least said pump device (3) the suction side of which is connected to the separator element (20) or to the conveying pipe (100) via an air channel (105) leading to it.

10. A method according to any one of claims 1-9, **characterised in that**, in the method, pressure is provided in the circuit with at least said pump device (3) the blowing side of which is connected to blow in the circuit.

11. A method according to any one of claims 1-10, **characterised in that**, in the method, the direction of conveying air circulation is reversed alternately at least in said section of the circuit, which section is formed by at least a part of the conveying pipe (100).

12. A method according to any one of claims 1-11, **characterised in that**, in the method, conveying air is further circulated in the circuit by blowing in the circuit with the pump device (3), such as a vacuum generator and/or a blower.

13. A method according to any one of claims 1-12, **characterised in that** the method comprises an operating mode in which at least a part of the conveying piping (100) is flushed and/or dried with air by circulating conveying air in the circuit, particularly by blowing in the circuit with the pump device (3).

14. A method according to any one of claims 1-13, **characterised in that**, in the method, material is fed from the material feed points (61) which are waste bins or waste chutes.

15. A method according to any one of claims 1-13, **characterised in that**, between the material feed point (61) and the conveying pipe (100), there is at least one fourth valve element (60) by opening and closing of which the feed of material and/or make-up air in the conveying pipe is regulated.

16. A method according to claim 15, **characterised in that** the fourth valve element (60) between the material feed point (61) and the conveying pipe (100) is closed, advantageously after a certain time after opening, so that the valve (60) of the previous feed point is still open when the valve of the next feed point (61) is opened.

17. A pneumatic waste material conveying system comprising an apparatus, which comprises at least one feed point (61) of waste material, a material conveying pipe (100) which is connectable to the feed point (61), a separator device (20) in which the material being conveyed is separated from conveying air, and a pump device (3) for providing a pressure difference in the conveying pipe (100) at least during the conveyance of the material, wherein the apparatus comprises a circuit which comprises at least a part of the conveying piping (100), in which circuit conveying air is circulatable, and that the apparatus comprises means (113, 114, 122, 124, 125, 126) for connecting the conveying air circulation to a reverse direction in relation to the normal conveying direction at least in a section of the circuit, which section is formed by at least a part of the conveying pipe (100), for removing a possible blockage wherein the circulation direction of the conveying air is connected in reverse direction only in the section of the circuit, mainly in the section of the conveying pipe (100), and before the separator device (20) in a material conveying direction,
**characterized in that** the means for connecting the conveying air in the reverse direction comprise a first air channel (110) on the blowing side of the pump device (3) to the usual supply side of the conveying pipe, said first air channel (110) comprising a first valve element (122) configured such that, when closed, it prevents a connection of at least the blowing side of the pump device (3) to the usual supply side of the conveying pipe (100),
a second air channel (113) from the blowing side of the pump device (3) to the reversed supply side of the conveying pipe (100) in which the blowing side of the pump device (3) is connectable,
and a second valve element (126) in the conveying pipe between the separator device (20) and the second air channel (113),
wherein a channel section (114) formed in the conveying pipe is connected to the conveying pipe (100) in a section between the second valve element (126) and the separator device (20) or directly to the separator device (20).

18. An apparatus according to claim 17, **characterised in that** the apparatus comprises an ejector device (9) which is arranged in the circuit on the blowing side of said pump device (3) between the pump device (3) and the conveying pipe (100), the actuating medium of which ejector device is the blowing air of the pump device (3).

19. An apparatus according to claim 17 or 18, **characterised in that** the ejector device comprises a fitting (93) for leading another medium flow to the actuating medium flow.

20. An apparatus according to any one of claims 17-19, **characterised in that**, in the material feed stage, underpressure is provided from the feed point to the conveying pipe to at least a part of the conveying piping (100) with the pump device, whereby an outlet air channel, such as the fitting (93), of the blowing side of the pump device (3) is arranged to open.

21. An apparatus according to any one of claims 17-20, **characterised in that**, in the circuit, which comprises at least a part of the conveying piping (100), are arranged gate/regulating elements, such as valve elements (122, 124, 125, 126, 127, V_{B}, V_{C}, V_{D}), by means of which the circulation of conveying air can be regulated and/or controlled and/or opened and closed.

22. An apparatus according to any one of claims 17-21, **characterised in that** the apparatus comprises at least one air inlet (107, 107', 93) which advantageously comprises a third valve element (128, 128', 96) for bringing air in the circuit from outside of it.

23. An apparatus according to any one of claims 17-22, **characterised in that** the apparatus comprises at least one outlet (93) which advantageously comprises a gate/regulating element, such as the third valve element (96), for removing at least part of air from the circuit.

24. An apparatus according to any one of claims 17-23, **characterised in that** the suction side of said pump device (3) is connected to the separator element (20) or an air channel (105) leading to it.

25. An apparatus according to any one of claims 17-24, **characterised in that** said at least one pump device (3) and means for connecting the blowing side of at least one pump device to blow in the circuit.

26. An apparatus according to any one of claims 17-25, **characterised in that** the apparatus comprises means for flushing at least a part of the conveying piping (100) with air and/or drying by circulating conveying air in the circuit, particularly by blowing.

27. An apparatus according to any one of claims 17-26, **characterised in that** the material feed points (61) are waste bins or waste chutes.

28. An apparatus according to any one of claims 17-27, **characterised in that**, between the feed point (61) and the conveying pipe (100), there is at least one fourth valve element (60) by opening and closing of which the feed of material and/or make-up air in the conveying pipe is regulated.

## Patentansprüche

1. Verfahren zum pneumatischen Fördern von Abfallmaterial mit einem pneumatischen Abfallfördersystem, wobei das Fördersystem wenigstens eine Einspeisestelle (61) für Abfallmaterial, ein Materialförderrohr (100), das mit der Einspeisestelle (61) verbindbar ist, eine Trennvorrichtung (20), in der das gerade beförderte Material von einer Förderluft getrennt wird, und eine Pumpvorrichtung (3) zur Schaffung einer Druckdifferenz in dem Förderrohr (100) wenigstens während der Beförderung des Materials aufweist, wobei wenigstens ein Teil der Förderrohrleitung (100) mit einem Abschnitt eines Kreislaufs verbindbar ist, in dem Förderluft wenigstens während der Beförderung des Abfallmaterials zirkuliert wird, und dass in dem Verfahren die Förderluftzirkulation wenigstens vorübergehend in einer umgekehrten Richtung in Bezug auf die normale Förderrichtung wenigstens in einem Abschnitt des Kreislaufs durch Mittel (113, 114, 122, 124, 125, 126) zum Anschluss der Förderluftzirkulation an eine umgekehrte Richtung in Bezug auf die normale Förderrichtung wenigstens in diesem Abschnitt des Kreislaufs, wobei der Abschnitt des Kreislaufs durch wenigstens einen Teil des Förderrohrs (100) gebildet ist, angeschlossen wird, um eine mögliche Blockade zu entfernen,
**dadurch gekennzeichnet, dass** die Zirkulationsrichtung der Förderluft nur in dem Abschnitt des Kreislaufs, hauptsächlich in einem Abschnitt des Förderrohrs (100) und vor der Trennvorrichtung (20) in einer Materialförderrichtung in die umgekehrte Richtung angeschlossen wird,
wobei die Mittel zum Anschluss der Förderluft in die umgekehrte Richtung aufweisen:
einen ersten Luftkanal (110) auf der Druckseite der Pumpvorrichtung (3) zu der gewöhnlichen Zuführseite des Förderrohrs, wobei der erste Luftkanal (110) ein erstes Ventilelement (122) aufweist, das im geschlossenen Zustand eine Verbindung von wenigstens der Druckseite der Pumpvorrichtung (3) mit der gewöhnlichen Zuführseite des Förderrohrs (100) verhindert,
einen zweiten Luftkanal (113) von der Druckseite der Pumpvorrichtung (3) zu der umgekehrten Zuführseite des Förderrohrs (100), in dem die Druckseite der Pumpvorrichtung (3) anschließbar ist,
und ein zweites Ventilelement (126) in dem Förderrohr zwischen der Trennvorrichtung (20) und dem zweiten Luftkanal (113),
wobei ein Kanalabschnitt (114), der in dem Förderrohr ausgebildet ist, mit dem Förderrohr (100) in einem Abschnitt zwischen dem zweiten Ventilelement (126) und der Trennvorrichtung (20) oder unmittelbar mit der Trennvorrichtung (20) verbunden ist.

2. Verfahren nach Anspruch 1, **dadurch gekennzeichnet, dass** wenigstens ein Teil der Förderluft mittels einer Ejektorvorrichtung (9) zirkuliert wird, in der zusätzliche Luft zu dem Kreislauf gebracht wird.

3. Verfahren nach Anspruch 1, **dadurch gekennzeichnet, dass** wenigstens ein Teil der Blasluft der Pumpvorrichtung (3) als das Antriebsmedium der Ejektorvorrichtung (9) verwendet wird.

4. Verfahren nach einem beliebigen der Ansprüche 1-3, **dadurch gekennzeichnet, dass** in der Materialeinspeisestufe ein Unterdruck von der Einspeisestelle (61) zu dem Förderrohr (100) zu wenigstens einem Teil der Förderrohrleitung (100) mit der Pumpvorrichtung geschaffen wird, wobei ein Auslassluftkanal, wie etwa ein Anschlussstück (93), der Druckseite der Pumpvorrichtung (3) offen ist.

5. Verfahren nach einem beliebigen der Ansprüche 1-4, **dadurch gekennzeichnet, dass** in der Förderstufe wenigstens der Hauptanteil der Luft auf der Druckseite der Pumpvorrichtung (3) in dem Kreislauf auf der Zuführseite des Förderrohrs (100) zirkuliert wird.

6. Verfahren nach einem beliebigen der Ansprüche 1-5, **dadurch gekennzeichnet, dass** in dem Verfahren Zuluft über wenigstens einen Lufteinlass (107, 107', 93), der vorteilhafterweise ein drittes Ventilelement (128, 128', 96) aufweist, in den Kreislauf eingebracht wird.

7. Verfahren nach einem beliebigen der Ansprüche 1-6, **dadurch gekennzeichnet, dass** das Verfahren einen Betriebsmodus aufweist, in dem Luft aus dem Kreislauf über wenigstens einen Luftauslass, wie etwa das Anschlussstück (93), abgeführt wird, der vorteilhafterweise ein Sperr-/Regulierelement, wie etwa das dritte Ventilelement (96), aufweist.

8. Verfahren nach einem beliebigen der Ansprüche 1-7, **dadurch gekennzeichnet, dass** die Luftzirkulation in dem Kreislauf, der wenigstens einen Teil der Förderrohrleitung (100) aufweist, durch die Sperr-/Regulierelemente, wie etwa Ventilelemente (122, 124, 125, 126, 127, V_{A}, V_{B}, V_{C}, V_{D}), die in dem Kreislauf angeordnet sind, geregelt und/oder gesteuert und/oder geöffnet oder geschlossen wird.

9. Verfahren nach einem beliebigen der Ansprüche 1-8, **dadurch gekennzeichnet, dass** in dem Verfahren ein Unterdruck in dem Kreislauf mit wenigstens der Pumpvorrichtung (3) geschaffen wird, deren Saugseite mit dem Trennelement (20) oder mit dem Förderrohr (100) über einen zu diesem führenden Luftkanal (105) verbunden ist.

10. Verfahren nach einem beliebigen der Ansprüche 1-9, **dadurch gekennzeichnet, dass** in dem Verfahren ein Druck in dem Kreislauf mit wenigstens der Pumpvorrichtung (3) geschaffen wird, deren Druckseite angeschlossen ist, um in den Kreislauf einzublasen.

11. Verfahren nach einem beliebigen der Ansprüche 1-10, **dadurch gekennzeichnet, dass** in dem Verfahren die Richtung der Förderluftzirkulation wenigstens in dem Abschnitt des Kreislaufs, dessen Abschnitt durch wenigstens einen Teil des Förderrohrs (100) gebildet ist, abwechselnd umgekehrt wird.

12. Verfahren nach einem beliebigen der Ansprüche 1-11, **dadurch gekennzeichnet, dass** in dem Verfahren Förderluft weiter in dem Kreislauf zirkuliert wird, indem sie in dem Kreislauf mit der Pumpvorrichtung (3), wie etwa einem Vakuumgenerator und/oder einem Gebläse, geblasen wird.

13. Verfahren nach einem beliebigen der Ansprüche 1-12, **dadurch gekennzeichnet, dass** das Verfahren einen Betriebsmodus aufweist, in dem wenigstens ein Teil der Förderrohrleitung (100) mit einer Luft gespült und/oder getrocknet wird, indem Förderluft in dem Kreislauf zirkuliert wird, insbesondere indem sie in dem Kreislauf mit der Pumpvorrichtung (3) geblasen wird.

14. Verfahren nach einem beliebigen der Ansprüche 1-13, **dadurch gekennzeichnet, dass** in dem Verfahren ein Material von den Materialeinspeisestellen (61) aus eingespeist wird, die Abfallbehälter oder Abfallschächte sind.

15. Verfahren nach einem beliebigen der Ansprüche 1-13, **dadurch gekennzeichnet, dass** zwischen der Materialeinspeisestelle (61) und dem Förderrohr (100) wenigstens ein viertes Ventilelement (60) vorhanden ist, durch dessen Öffnen und Schließen die Einspeisung des Materials und/oder der Zuluft in das Förderrohr reguliert wird.

16. Verfahren nach Anspruch 15, **dadurch gekennzeichnet, dass** das vierte Ventilelement (60) zwischen der Materialeinspeisestelle (61) und dem Förderrohr (100) vorteilhafterweise nach einer gewissen Zeit nach dem Öffnen derart geschlossen wird, dass das Ventil (60) der vorherigen Einspeisestelle noch offen ist, wenn das Ventil der nächsten Einspeisestelle (61) geöffnet wird.

17. Pneumatisches Abfallmaterialfördersystem, das eine Vorrichtung, die wenigstens eine Einspeisestelle (61) für Abfallmaterial aufweist, ein Materialförderrohr (100), das mit der Einspeisestelle (61) verbindbar ist, eine Trennvorrichtung (20), in der das gerade beförderte Material von einer Förderluft getrennt wird, und eine Pumpvorrichtung (3) zur Schaffung einer Druckdifferenz in dem Förderrohr (100) wenigstens während der Beförderung des Materials aufweist, wobei die Vorrichtung einen Kreislauf aufweist, der wenigstens einen Teil der Förderrohrleitung (100) aufweist, wobei in dem Kreislauf Förderluft zirkuliert werden kann, und dass die Vorrichtung Mittel (113, 114, 122, 124, 125, 126) zum Anschluss der Förderluftzirkulation in eine umgekehrte Richtung in Bezug auf die normale Förderrichtung wenigstens in einem Abschnitt des Kreislaufs aufweist, wobei der Abschnitt durch wenigstens einen Teil des Förderrohrs 100 gebildet ist, um eine mögliche Blockade zu entfernen, wobei die Zirkulations-richtung der Förderluft nur in dem Abschnitt des Kreislaufs, hauptsächlich in dem Abschnitt des Förderrohrs (100), und vor der Trennvorrichtung (20) in einer Materialförderrichtung in die umgekehrten Richtung angeschlossen wird,
**dadurch gekennzeichnet, dass** die Mittel zum Anschluss der Förderluft in die umgekehrte Richtung aufweisen:
einen ersten Luftkanal (110) auf der Druckseite der Pumpvorrichtung (3) zu der gewöhnlichen Zuführseite des Förderrohrs, wobei der erste Luftkanal (110) ein erstes Ventilelement (122) aufweist, das derart eingerichtet ist, dass es im geschlossenen Zustand eine Verbindung wenigstens der Druckseite der Pumpvorrichtung (3) mit der gewöhnlichen Zuführseite des Förderrohrs (100) verhindert,
einen zweiten Luftkanal (113) von der Druckseite der Pumpvorrichtung (3) zu der umgekehrten Zuführseite des Förderrohrs (100), in dem die Druckseite der Pumpvorrichtung (3) anschließbar ist,
und ein zweites Ventilelement (126) in dem Förderrohr zwischen der Trennvorrichtung (20) und dem zweiten Luftkanal (113),
wobei ein Kanalabschnitt (114), der in dem Förderrohr ausgebildet ist, mit dem Förderrohr (100) in einem Abschnitt zwischen dem zweiten Ventilelement (126) und der Trennvorrichtung (20) oder unmittelbar mit der Trennvorrichtung (20) verbunden ist.

18. Vorrichtung nach Anspruch 17, **dadurch gekennzeichnet, dass** die Vorrichtung eine Ejektorvorrichtung (9) aufweist, die in dem Kreislauf auf der Druckseite der Pumpvorrichtung (3) zwischen der Pumpvorrichtung (3) und dem Förderrohr (100) angeordnet ist, wobei das Antriebsmedium der Ejektorvorrichtung die Blasluft der Pumpvorrichtung (3) ist.

19. Vorrichtung nach Anspruch 17 oder 18, **dadurch gekennzeichnet, dass** die Ejektorvorrichtung ein Anschlussstück (93) aufweist, um eine Strömung eines weiteren Mediums zu der Antriebsmediumströmung zu leiten.

20. Vorrichtung nach einem beliebigen der Ansprüche 17-19, **dadurch gekennzeichnet, dass** in der Materialeinspeisestufe ein Unterdruck von der Einspeisestelle zu dem Förderrohr zu wenigstens einem Teil der Förderrohrleitung (100) mit der Pumpvorrichtung geschaffen wird, wobei ein Auslassluftkanal, wie etwa das Anschlussstück (93), der Druckseite der Pumpvorrichtung (3) eingerichtet ist, um zu öffnen.

21. Vorrichtung nach einem beliebigen der Ansprüche 17-20, **dadurch gekennzeichnet, dass** in dem Kreislauf, der wenigstens einen Teil der Förderrohrleitung (100) aufweist, Sperr-/Regulierelemente, wie etwa Ventilelemente (122, 124, 125, 126, 127, V_{B}, V_{C}, V_{D}), angeordnet sind, mit denen die Zirkulation der Förderluft geregelt und/oder gesteuert und/oder geöffnet und geschlossen werden kann.

22. Vorrichtung nach einem beliebigen der Ansprüche 17-21, **dadurch gekennzeichnet, dass** die Vorrichtung wenigstens einen Lufteinlass (107, 107', 93) aufweist, der vorteilhafterweise ein drittes Ventilelement (128, 128', 96) aufweist, um Luft von dessen Außenseite aus in den Kreislauf einzubringen.

23. Vorrichtung nach einem beliebigen der Ansprüche 17-22, **dadurch gekennzeichnet, dass** die Vorrichtung wenigstens einen Auslass (93) aufweist, der vorteilhafterweise ein Sperr-/Regulierelement, wie etwa das dritte Ventilelement (96), aufweist, um wenigstens einen Teil der Luft aus dem Kreislauf abzuführen.

24. Vorrichtung nach einem beliebigen der Ansprüche 17-23, **dadurch gekennzeichnet, dass** die Saugseite der Pumpvorrichtung (3) mit dem Trennelement (20) oder einem zu diesem führenden Luftkanal (105) verbunden ist.

25. Vorrichtung nach einem beliebigen der Ansprüche 17-24, **gekennzeichnet durch** die wenigstens eine Pumpvorrichtung (3) und Mittel zum Anschluss der Druckseite von wenigstens einer Pumpvorrichtung, um in den Kreislauf einzublasen.

26. Vorrichtung nach einem beliebigen der Ansprüche 17-25, **dadurch gekennzeichnet, dass** die Vorrichtung Mittel zur Spülung wenigstens eines Teils der Förderrohrleitung (100) mit Luft und/oder zur Trocknung durch Zirkulation von Förderluft in dem Kreislauf, insbesondere durch Blasen, aufweist

27. Vorrichtung nach einem beliebigen der Ansprüche 17-26, **dadurch gekennzeichnet, dass** die Materialeinspeisestellen (61) Abfallbehälter oder Abfallschächte sind.

28. Vorrichtung nach einem beliebigen der Ansprüche 17-27, **dadurch gekennzeichnet, dass** zwischen der Einspeisestelle (61) und dem Förderrohr (100) wenigstens ein viertes Ventil-element (60) vorgesehen ist, durch dessen Öffnen und Schließen die Einspeisung von Material und/oder Zuluft in das Förderrohr reguliert wird.

## Revendications

1. Procédé pour transporter par voie pneumatique des déchets avec un système de transport de déchets pneumatique, lequel système de transport comprend au moins un point d'alimentation (61) de déchets, un tuyau de transport de matière (100) qui peut être raccordé au point d'alimentation (61), un dispositif séparateur (20) dans lequel la matière qui est transportée est séparée de l'air de transport, et un dispositif de pompe (3) pour fournir une différence de pression dans le tuyau de transport (100) au moins pendant le transport de la matière, dans lequel
au moins une partie du tuyau de transport (100) peut être raccordée en tant que section d'un tuyau dans lequel l'air de transport est circulé au moins pendant le transport des déchets et en ce que, dans le procédé, la circulation d'air de transport est raccordée, au moins momentanément, à une direction inverse par rapport à la direction de transport normale au moins dans une section du circuit par des moyens (113, 114, 122, 124, 125, 126) pour raccorder la circulation d'air de transport à une direction inverse par rapport à la direction de transport normale au moins dans cette section du circuit, laquelle section du circuit est formée par au moins une partie du tuyau de transport (100), pour supprimer un blocage éventuel, **caractérisé en ce que** la direction de circulation de l'air de transport est raccordée en direction inverse uniquement dans ladite section du circuit, principalement dans la section du tuyau de transport (100), et avant le dispositif séparateur (20) dans une direction de transport de matière,
dans lequel les moyens pour raccorder l'air de transport dans la direction inverse comprennent un premier canal d'air (110) du côté de soufflage du dispositif de pompe (3) au côté d'amenée habituel du tuyau de transport, ledit premier canal d'air (110) comprenant un premier élément de valve (122) qui, lorsqu'il est fermé, empêche un raccordement d'au moins le côté de soufflage du dispositif de pompe (3) au côté d'amenée habituel du tuyau de transport (100),
un second canal d'air (113) du côté de soufflage du dispositif de pompe (3) au côté d'amenée inversé du tuyau de transport (100) dans lequel le côté de soufflage du dispositif de pompe (3) peut être raccordé,
et un deuxième élément de valve (126) dans le tuyau de transport entre le dispositif séparateur (20) et le second canal d'air (113),
dans lequel une section de canal (114) formée dans le tuyau de transport est raccordée au tuyau de transport (100) dans une section entre le deuxième élément de valve (126) et le dispositif séparateur (20) ou directement au dispositif séparateur (20).

2. Procédé selon la revendication 1, **caractérisé en ce qu'**au moins une partie de l'air de transport est circulée via un dispositif d'éjection (9) dans lequel l'air supplémentaire est amené au circuit.

3. Procédé selon la revendication 2, **caractérisé en ce qu'**au moins une partie de l'air de soufflage du dispositif de pompe (3) est utilisée en tant que milieu d'actionnement du dispositif d'éjection (9).

4. Procédé selon l'une quelconque des revendications 1 à 3, **caractérisé en ce que**, à l'étape d'alimentation de matière, la sous-pression est fournie du point d'alimentation (61) au tuyau de transport (100) à au moins une partie du tuyau de transport (100) avec le dispositif de pompe, moyennant quoi un canal d'air de sortie, tel qu'un raccord (93), du côté de soufflage du dispositif de pompe (3) est ouvert.

5. Procédé selon l'une quelconque des revendications 1 à 4, **caractérisé en ce que**, à l'étape de transport, au moins la partie principale de l'air du côté de soufflage de la pompe (3) est circulée dans le circuit du côté d'amenée du tuyau de transport (100).

6. Procédé selon l'une quelconque des revendications 1 à 5, **caractérisé en ce que**, dans le procédé, l'air d'appoint est amené dans le circuit via au moins une entrée d'air (107, 107', 93) qui comprend de manière avantageuse un troisième élément de valve (128, 128', 96).

7. Procédé selon l'une quelconque des revendications 1 à 6, **caractérisé en ce que** le procédé comprend un mode opératoire dans lequel l'air est retiré du circuit via au moins une sortie d'air, tel que ledit raccord (93), qui comprend avantageusement un élément de porte/régulation, tel que ledit troisième élément de valve (96).

8. Procédé selon l'une quelconque des revendications 1 à 7, **caractérisé en ce que** la circulation d'air dans le circuit, qui comprend au moins une partie du tuyau de transport (100), est régulée et/ou commandée et/ou ouverte ou fermée par les éléments de porte/régulation, tels que des éléments de valve (122, 124, 125, 126, 127, V_{A}, V_{B}, V_{C}, V_{D}) qui sont agencés dans le circuit.

9. Procédé selon l'une quelconque des revendications 1 à 8, **caractérisé en ce que**, dans le procédé, la sous-pression est fournie dans le circuit avec au moins ledit dispositif de pompe (3), dont le côté d'aspiration est raccordé à l'élément séparateur (20) ou au tuyau de transport (100) via un canal d'air (105) menant à ce dernier.

10. Procédé selon l'une quelconque des revendications 1 à 9, **caractérisé en ce que**, dans le procédé, la pression est fournie dans le circuit avec au moins ledit dispositif de pompe (3), dont le côté de soufflage est raccordé pour souffler dans le circuit.

11. Procédé selon l'une quelconque des revendications 1 à 10, **caractérisé en ce que**, dans le procédé, la direction de la circulation de l'air de transport est inversée de manière alternée au moins dans ladite section du circuit, laquelle section est formée par au moins une partie du tuyau de transport (100).

12. Procédé selon l'une quelconque des revendications 1 à 11, **caractérisé en ce que**, dans le procédé, l'air de transport est en outre circulé dans le circuit en soufflant dans le circuit avec le dispositif de pompe (3), tel qu'un générateur de vide et/ou une soufflante.

13. Procédé selon l'une quelconque des revendications 1 à 12, **caractérisé en ce que** le procédé comprend un mode opératoire dans lequel au moins une partie du tuyau de transport (100) est rincée et/ou séchée avec de l'air en faisant circuler l'air de transport dans le circuit, en particulier en soufflant dans le circuit avec le dispositif de pompe (3).

14. Procédé selon l'une quelconque des revendications 1 à 3, **caractérisé en ce que**, dans le procédé, la matière est alimentée à partir des points d'alimentation de matière (61) qui sont des poubelles ou des bacs à ordures.

15. Procédé selon l'une quelconque des revendications 1 à 13, **caractérisé en ce que**, entre le point d'alimentation de matière (61) et le tuyau de transport (100), il y a au moins un quatrième élément de valve (60) par l'ouverture et la fermeture duquel l'alimentation de matière et/ou d'air d'appoint dans le tuyau de transport est régulée.

16. Procédé selon la revendication 15, **caractérisé en ce que** le quatrième élément de valve (60) entre le point d'alimentation de matière (61) et le tuyau de transport (100) est fermé, de manière avantageuse après un certain temps après l'ouverture, de sorte que la valve (60) du point d'alimentation précédent est encore ouverte lorsque la valve du point d'alimentation suivant (61) est ouverte.

17. Système de transport de déchets pneumatique comprenant un appareil, qui comprend au moins un point d'alimentation (61) de déchets, un tuyau de transport de matière (100) qui peut être raccordé au point d'alimentation (61), un dispositif séparateur (20) dans lequel la matière qui est transportée est séparée de l'air de transport, et un dispositif de pompe (3) pour fournir une différence de pression dans le tuyau de transport (100) au moins pendant le transport de la matière, dans lequel l'appareil comprend un circuit qui comprend au moins une partie du tuyau de transport (100), dans lequel circuit, l'air de transport peut être circulé, et en ce que l'appareil comprend des moyens (113, 114, 122, 124, 125, 126) pour raccorder la circulation de l'air de transport à une direction inverse par rapport à la direction de transport normale au moins dans une section du circuit, laquelle section est formée par au moins une partie du tuyau de transport (100), pour supprimer un blocage éventuel, dans lequel la direction de circulation de l'air de transport est raccordée en direction inverse uniquement dans la section du circuit, principalement dans la section du tuyau de transport (100), et avant le dispositif séparateur (20) dans une direction de transport de matière,
**caractérisé en ce que** les moyens pour raccorder l'air de transport dans la direction inverse comprennent un premier canal d'air (110) du côté de soufflage du dispositif de pompe (3) au côté d'amenée habituel du tuyau de transport, ledit premier canal d'air (110) comprenant un premier élément de valve (122) configuré de sorte que, lorsqu'il est fermé, il empêche un raccordement d'au moins le côté de soufflage du dispositif de pompe (3) au côté d'amenée habituel du tuyau de transport (100),
un second canal d'air (113) du côté de soufflage du dispositif de pompe (3) au côté d'amenée inversé du tuyau de transport (100) dans lequel le côté de soufflage du dispositif de pompe (3) peut être raccordé,
et un deuxième élément de valve (126) dans le tuyau de transport entre le dispositif séparateur (20) et le second canal d'air (113),
dans lequel une section de canal (114) formée dans le tuyau de transport est raccordée au tuyau de transport (100) dans une section entre le deuxième élément de valve (126) et le dispositif séparateur (20) ou directement au dispositif séparateur (20).

18. Appareil selon la revendication 17, **caractérisé en ce que** l'appareil comprend un dispositif d'éjection (9) qui est agencé dans le circuit du côté de soufflage dudit dispositif de pompe (3) entre le dispositif de pompe (3) et le tuyau de transport (100), dont le milieu d'actionnement du dispositif d'éjection est l'air de soufflage du dispositif de pompe (3).

19. Appareil selon la revendication 17 ou 18, **caractérisé en ce que** le dispositif d'éjection comprend un raccord (93) pour amener un autre écoulement de milieu à l'écoulement de milieu d'actionnement.

20. Appareil selon l'une quelconque des revendications 17 à 19, **caractérisé en ce que**, à l'étape d'alimentation de matière, la sous-pression est fournie du point d'alimentation au tuyau de transport à au moins une partie du tuyau de transport (100) avec le dispositif de pompe, moyennant quoi un canal d'air de sortie, tel qu'un raccord (93), du côté de soufflage du dispositif de pompe (3) est agencé pour s'ouvrir.

21. Appareil selon l'une quelconque des revendications 17 à 20, **caractérisé en ce que**, dans le circuit, qui comprend au moins une partie du tuyau de transport (100), sont agencés des éléments de porte/régulation, tels que des éléments de valve (122, 124, 125, 126, 127, V_{B}, V_{C}, V_{D}) au moyen desquels la circulation de l'air de transport peut être régulée et/ou commandée et/ou ouverte et fermée.

22. Appareil selon l'une quelconque des revendications 17 à 21, **caractérisé en ce que** l'appareil comprend au moins une entrée d'air (107, 107', 93) qui comprend avantageusement un troisième élément de valve (128, 128', 96) pour amener l'air dans le circuit depuis l'extérieur de ce dernier.

23. Appareil selon l'une quelconque des revendications 17 à 22, **caractérisé en ce que** l'appareil comprend au moins une sortie (93) qui comprend avantageusement un élément de porte/régulation, tel que le troisième élément de valve (96), pour retirer au moins une partie de l'air du circuit.

24. Appareil selon l'une quelconque des revendications 17 à 23, **caractérisé en ce que** le côté d'aspiration dudit dispositif de pompe (3) est raccordé à l'élément séparateur (20) ou à un canal d'air (105) l'amenant à ce dernier.

25. Appareil selon l'une quelconque des revendications 17 à 24, **caractérisé en ce que** ledit au moins un dispositif de pompe (3) et des moyens pour raccorder le côté de soufflage du au moins un dispositif de pompe pour souffler dans le circuit.

26. Appareil selon l'une quelconque des revendications 17 à 25, **caractérisé en ce que** l'appareil comprend des moyens pour rincer au moins une partie du tuyau de transport (100) avec l'air et/ou le séchage en faisant circuler l'air de transport dans le circuit, en particulier par soufflage.

27. Appareil selon l'une quelconque des revendications 17 à 26, **caractérisé en ce que** les points d'alimentation de matière (61) sont des poubelles ou des bacs à ordures.

28. Appareil selon l'une quelconque des revendications 17 à 27, **caractérisé en ce que**, entre le point d'alimentation (61) et le tuyau de transport (100), il y a au moins un quatrième élément de valve (60) par l'ouverture et la fermeture duquel l'alimentation de matière et/ou d'air d'appoint dans le tuyau de transport est régulée.
